# EUROPÄISCHE PATENTSCHRIFT

(11) **EP 3 157 995 B1**
(45) Veröffentlichungstag und Bekanntmachung des Hinweises auf die Patenterteilung: **24.07.2019**
(21) Anmeldenummer: 15733348.5
(22) Anmeldetag: 11.06.2015
(51) Int. Cl.: C08K 9/10, B41M 5/26

(54) **MIKROKUGELN**
MICROSPHERES
MICROSPHÈRES

(30) Priorität: 23.06.2014 DE 102014008962
(43) Veröffentlichungstag der Anmeldung: 26.04.2017
(73) Patentinhaber: Merck Patent GmbH, 64293 Darmstadt (DE)
(72) Erfinder: QUITTMANN, Ulrich, 65439 Floersheim (DE); WILHELM, Volker, 64563 Lorsch (DE); BREHM, Hans-Juergen, 64678 Lindenfels (DE)
(86) Internationale Anmeldenummer: PCT/EP2015/001177
(87) Internationale Veröffentlichungsnummer: WO 2015/197162

(56) Entgegenhaltungen:
- WO-A1-2014/206523
- WO-A2-2014/060099
- US-A1- 2011 034 609

## Beschreibung

Die vorliegende Erfindung betrifft Mikrokugeln und deren Verwendung, vorzugsweise als laserabsorbierendes Additiv, sowie ein Verfahren für deren Herstellung.

Die Identifikationsmarkierung von Produkten nimmt in annähernd allen Industriezweigen immer weiter an Bedeutung zu. Häufig ist es notwendig Produktionsdaten, Ablaufdaten, Strichcodes, Firmenlogos, Seriennummern, usw., auf Kunststoffteilen oder flexiblen Kunststofffolien aufzubringen. Diese Beschriftungen werden derzeit meist unter Verwendung herkömmlicher Techniken, wie Drucken, Warmprägen, anderen Prägeverfahren oder Etikettieren ausgeführt. Insbesondere bei Kunststoffen wird jedoch immer mehr Wert auf ein kontaktloses, sehr schnelles und flexibles Beschriftungsverfahren mit Lasern gelegt. Mit dieser Technik lassen sich grafische Aufdrucke wie z. B. Strichcodes mit hoher Geschwindigkeit sogar auf nichtplanare Oberflächen aufbringen. Da sich die Beschriftung innerhalb des Kunststoffgegenstands selbst befindet, ist sie dauerhaft abriebfest.

Es ist allgemein bekannt, dass bestimmte Materialien wie Polymere, wie z. B. Kunststoffe und Harze, bei Bestrahlung mit Laserlicht Energie aus dem Laserlicht absorbieren und diese Energie in Wärme umwandeln können, die eine farbverändernde Reaktion (=Beschriftung) im Material induzieren kann. Laserlichtabsorptionsmittel werden verwendet, um die Laserlichtabsorption zu verbessern, wenn die intrinsische Fähigkeit eines Polymers hinsichtlich der Absorption von Laserlicht unzureichend ist.

Viele Kunststoffe, z. B. Polyolefine und Polystyrole, konnten bisher nur schwer oder gar nicht mit einem Laser beschriftet werden. Ein CO₂-Laser, der Infrarotlicht im Bereich von 10,6 µm emittiert, ergibt nur eine sehr schwache, kaum lesbare Beschriftung auf Polyolefinen oder Polystyrolen, selbst bei Verwendung einer hohen Leistung. Bei Polyurethanelastomeren und Polyetheresterelastomeren gibt es keine Wechselwirkung mit Nd-YAG-Lasern, aber bei Verwendung von CO₂-Lasern tritt eine Prägung auf. Ein Kunststoff darf kein Laserlicht reflektieren oder weiterleiten, da es dann nicht zu einer Wechselwirkung kommt. Ebenso darf jedoch keine übermäßig starke Absorption stattfinden, da der Kunststoff in diesem Fall verdampft und nur eine Prägung übrig bleibt. Die Absorption von Laserstrahlen, und daher die Wechselwirkung mit dem Material, hängen von der chemischen Struktur der Zusammensetzung und von der verwendeten Laserwellenlänge ab. Es ist häufig erforderlich, geeignete Additive wie z. B. Absorptionsmittel zuzusetzen, um Kunststoffe laserbeschriftbar zu machen.

Das erfolgreiche Absorptionsmittel sollte eine sehr blasse inhärente Farbe aufweisen und/oder nur in sehr geringen Mengen eingesetzt werden müssen. Aus dem Stand der Technik ist bekannt, dass das Kontrastmittel Antimontrioxid solche Kriterien erfüllt, wie beispielsweise in den folgenden Patenten und Patentanmeldungen U.S. 4,816,374, U.S. 6,214,917 B1, WO 01/00719 A1 und WO 2009/003976 A1 beschrieben. Allerdings ist Antimontrioxid toxisch und steht im Verdacht, kanzerogen zu sein, und daher sind antimonfreie Laserbeschriftungsadditive erwünscht.

Antimonfreie Laserbeschriftungsadditive sind aus der Literatur bekannt. Zum Beispiel beschreibt EP 1 190 988 A2 laserbeschriftbare Verbindungen, die Bismut und mindestens ein zusätzliches Metall enthalten. US 2007/0029294 A1 richtet sich auf laserbeschriftbare Verbindungen der Formel MOCl, wobei M entweder As, Sb oder Bi ist, sowie BiONO₃, Bi₂O₂CO₃, BiOOH, BiOF, BiOBr, Bi₂O₃, BiOC₃H₅O₇, usw. als Additiv.

Die Verwendung von auf Bismutverbindungen basierenden Laserbeschriftungsadditiven ist wohlbekannt. Der Nachteil von auf Bismut basierenden Laserbeschriftungsadditiven ist, dass sie nicht für alle Arten von Kunststoff geeignet sind. In bestimmten Matrixpolymeren zeigen die Bismutverbindungen eine starke Verfärbung, insbesondere wenn hohe Verarbeitungstemperaturen, d. h. > 220 °C, eingesetzt werden. Zum Beispiel kann Bi₂O₃ nicht als Farbbildner für das Laserbeschriften von Polyamid verwendet werden, da während der Verarbeitung eine exotherme Reaktion stattfindet, die zu einem dunklen Produkt führt.

WO 2011/050934 A2 richtet sich auf ein Laserbeschriftungsadditiv, das eine bismuthaltige Verbindung sowie ein funktionalisiertes Polymer mit 0,01 bis 50 Gew.-% funktionellen Gruppen enthält. Der Nachteil dieses Laseradditivs ist, dass das funktionalisierte Polymer nicht zum Farbbildungsprozess beiträgt und daher die Beschriftungsleistung vor allem hinsichtlich der Beschriftungsgeschwindigkeit verringert, wenn es in Polymeren wie z. B. Polyamid und Polyestern eingesetzt wird. Auch aus diesem Grund wird die Anwendung dieses Laserbeschriftungsadditivs bei nicht oder unzureichend laserbeschriftbaren Polymeren wie Polyolefinen zu einer sehr schlechten Beschriftungsleistung sowohl hinsichtlich Beschriftungskontrast als auch Geschwindigkeit führen. Darüber hinaus zeigt das Laserbeschriftungsadditiv bei Verarbeitung oberhalb des im Allgemeinen niedrigen Schmelzpunkts (Tₘ < 160 °C) des funktionalisierten Polymers in bestimmten Matrixpolymeren nach wie vor Verfärbungen aufgrund der Migration der Bismutverbindung in das Matrixpolymer, was die unerwünschte exotherme Reaktion verursacht.

Aufgabe der vorliegenden Erfindung ist es daher ein nichttoxisches Laserbeschriftungsadditiv zu finden, dass eine kontrastreiche Beschriftung bei Exposition gegenüber Laserlicht ermöglicht und nur geringe Mengen Schwermetalle enthält sowie den Kontrast und die Auflösung bei niedrigen und hohen Beschriftungsgeschwindigkeiten weiter verbessert. Weiterhin sollte das Endprodukt keine oder nur eine unwesentliche Hintergrundverfärbung durch das verwendete Laserbeschriftungsadditiv aufweisen.

Überraschenderweise wurde gefunden, dass Mikrokugeln, die Kern-Schale-Partikel dispergiert in einer Polyolefinmatrix umfassen, wobei der Kern als Absorptionsmittel ein Gemisch bestehend aus einer oder mehreren Bismutverbindungen und einem oder mehreren Weißpigmenten und/oder hellen oder weißen mineralischen Füllstoffen enthält und als Filmbildner mindestens eine nichtolefinische Polymerverbindung enthält und die Schale mindestens ein Kompatibilisierungsmittel aufweist, keine der oben genannten Nachteile zeigen und als Laserbeschriftungs-additiv für alle Arten von Polymeren, vorzugsweise thermoplastische Polymere, hervorragend geeignet sind.

Gegenstand der vorliegenden Erfindung ist eine Mikrokugel umfassend einen Kern-Schale-Partikel dispergiert in einen Polyolefinträger, dadurch gekennzeichnet, dass der Kern als Absorptionsmittel ein Gemisch bestehend aus einer oder mehreren Bismutverbindungen und einem oder mehreren Weißpigmenten und/oder hellen oder weißen mineralischen Füllstoffen enthält und als Filmbildner mindestens eine nichtolefinische Polymerverbindung enthält und die Schale mindestens ein Kompatibilisierungsmittel aufweist, wobei der D₅₀-Wert für die Weißpigmente bzw. Füllstoffe 0,02 - 5 µm beträgt.

Mikrokugeln als solche, die als Laserabsorptionsmittel dienen und auf Kern-Schale-Partikeln basieren, sind aus den Patentanmeldungen WO 2004/050766 A1, WO 2004/050767 A1 und WO 2009/003976 A1 bekannt.

Beim Bestrahlen mit Laserlicht zeigen Polymerzusammensetzungen wie Kunststoffe, die die erfindungsgemäßen Mikrokugeln enthalten, selbst bei hohen Beschriftungsgeschwindigkeiten einen unerwartet hohen Kontrast bei einem breiten Bereich von Lasersystemen. Aufgrund des synergistischen Effekts zwischen dem Laserlichtabsorptionsmittelgemisch und dem Farbbildner im Kern und dem Polymer der Schale können die hell gefärbten Mikrokugeln als Laserabsorptionsmittel mit einer verbesserten Laserbeschriftungsleistung hinsichtlich Kontrast und Geschwindigkeit verglichen mit den bekannten Laseradditiven dienen, die kommerziell erhältlich und in der Literatur beschrieben werden. Darüber hinaus führt die verbesserte Leistung zu einer geringeren Dosierung im Endprodukt, wodurch eine Kostenverringerung erreicht wird. Des Weiteren führt die geringere Dosierung im Endprodukt im Vergleich mit Zusammensetzungen nach dem Stand der Technik, die Antimon- oder Bismutverbindungen enthalten, bei Einbau der erfindungsgemäßen Mikrokugeln auch zu weniger Einfluss auf alle anderen Eigenschaften einer laserbeschriftbaren Zusammensetzung der vorliegenden Erfindung. Da Bismut als nichttoxisches Schwermetall gilt, kann es auch in medizinischen Anwendungen eingesetzt werden.

Darüber hinaus bedeutet eine geringere Dosierung im Endprodukt, dass alle anderen Eigenschaften, wie z. B. die mechanischen Eigenschaften der erfindungsgemäßen laserbeschriftbaren Zusammensetzung im Vergleich mit laserbeschriftbaren Zusammensetzungen aus dem Stand der Technik, die als Laserlichtabsorptionsmittel Antimon- oder Bismutverbindungen enthalten, bei Verwendung der erfindungsgemäßen Mikrokugeln weniger beeinflusst werden.

Das verwendete Laserlichtabsorptionsmittel kann aus solchen Bismutverbindungen und hellen bzw. weißen mineralischen Füllstoffen und/oder Weißpigmenten hergestellt werden, die Laserlicht einer bestimmten Wellenlänge absorbieren können. In der Ausführung liegt diese Wellenlänge zwischen 157 nm und 10,6 µm, dem gebräuchlichen Wellenlängenbereich von Lasern. Sollten Laser mit längeren oder kürzeren Wellenlängen verfügbar werden, können andere Absorptionsmittel ebenfalls für eine Anwendung geeignet sein. Beispiele für solche Laser, die im genannten Bereich arbeiten, sind CO₂-Laser (10,6 µm), Nd:YAG- oder Nd:YVO₄-Laser (1064 nm, 532 nm, 355 nm, 266 nm) und Excimerlaser der folgenden Wellenlängen: F₂ (157 nm), ArF (193 nm), KrCI (222 nm), KrF (248 nm), XeCI (308 nm) und XeF (351 nm), FAYb-Faserlaser, Diodenlaser und Diodenarraylaser. Vorzugsweise werden Nd:YAG-Laser und CO₂-Laser verwendet, da diese Typen bei einer Wellenlänge arbeiten, die für die Induzierung eines thermischen Prozesses für Beschriftungszwecke besonders geeignet ist.

Geeignete Beispiele für Laserlichtabsorptionsmittel sind Oxide, Hydroxide, Halogenide, Oxyhalogenide, Sulfide, Sulfate und Phosphate von Bismut. Vorzugsweise wird/werden das/die Laserabsorptionsmittel aus Bismuttrioxid (Bi₂O₃) und/oder Bismutoxychlorid (BiOCI) ausgewählt.

Als mineralische Füllstoffe sind insbesondere Calciumcarbonat, Calciumsilikat, Calciumsulfat, Kaolin, Quart und Talkum geeignet. Bei den bevorzugten Weißpigmenten sind insbesondere Titandioxid, Bariumsulfat, Zinkoxid und Zinksulfid zu nennen. Besonders bevorzugt ist Titandioxid.

In einer bevorzugten Ausführungsform enthalten die erfindungsgemäßen Mikrokugeln als Laserabsorptionsmittel ein Gemisch aus Bi₂O₃ und TiO₂.

Das Gewichtsverhältnis Bismutverbindung zu Weißpigment bzw. Füllstoff im Laserabsorptionsmittel beträgt vorzugsweise 99 : 1 bis 1 : 99 Teile, insbesondere 90 : 10 bis 10 : 90 Teile und ganz besonders bevorzugt 80 : 20 bis 20 : 80 Teile.

Die Mikrokugeln enthalten vorzugsweise 20-90 Gew.-%, insbesondere 50-90 Gew.-% und ganz besonders bevorzugt 75-90 Gew.-% an Absorptionsmittelgemisch bezogen auf die Mikrokugel.

Die Absorptionsmittel, d. h. das Gemisch aus Bismutverbindung(en), Weißpigment(en) und/oder Füllstoffen, ist in den Mikrokugeln vorzugsweise in der Form von Partikeln vorhanden. Die Partikelgröße des Absorptionsmittels wird durch die Anforderung bestimmt, dass die Bismutverbindung in das Polymer im Kern einmischbar sein muss. Einem Fachmann auf dem Gebiet ist bekannt, dass diese Mischbarkeit durch die Gesamtoberfläche einer bestimmten Gewichtsmenge der Bismutverbindungen und der Weißpigmente bzw. Füllstoffe bestimmt wird und dass der Fachmann die untere Grenze der Partikelgröße des einzumischenden Absorptionsmittelgemisches ohne Weiteres bestimmen kann, wenn die gewünschte Größe der Mikrokugeln und die gewünschte Menge von einzumischenden Absorptionsmitteln bekannt sind. Vorzugsweise liegt der D₅₀-Wert der Bismutverbindungen im Bereich von 0,2-10 µm, insbesondere 0,3-3 µm und ganz besonders bevorzugt im Bereich von 0,5-2 µm.

Das zugegebene Weißpigment oder der Füllstoff haben idealerweise eine Teilchengröße, die es ermöglicht Zwischenräume zwischen den Absorberpartikeln in der Mikrokugel aufzufüllen. Der D₅₀-Wert für die Weißpigmente bzw. Füllstoffe beträgt 0,02 - 5 µm, insbesondere 0,05 - 2,5 µm und ganz besonders bevorzugt 0,1 - 1 µm. Der D₅₀-Wert in dieser Anmeldung wird mittels Laserbeugung (Malvern 2000) bestimmt.

Bi₂O₃ ist kommerziell erhältlich, zum Beispiel von der 5N Plus Lübeck GmbH, Deutschland (früher MCP-HEK GmbH), von Poch S.A., Polen oder von der Merck Millipore GmbH, Deutschland.

BiOCI ist kommerziell erhältlich von der Merck KGaA, ChemService Inc. USA oder von PCF Chimie, Frankreich.

Vorzugsweise weist das verwendete Bi₂O₃ eine Partikelgröße im Bereich von 0,2-10 µm, insbesondere 0,3-3 µm und ganz besonders bevorzugt von 0,5-2 µm auf.

Weißpigmente und helle bzw. weiße mineralische Füllstoffe sind kommerziell erhältlich, z. B. von Kronos Titan, Alpha Calcit Sachtleben, Imerys oder Rio Tinto. Als Füllstoff eignet sich insbesondere Titandioxid in der Rutilform. Der Einsatz von Rutil bietet den Vorteil der besseren Bewitterungseigenschaften und der höheren Lichtechtheit.

Besonders geeignet sind Titandioxidtypen, die über eine Nachbeschichtung verfügen und für den Einsatz in Kunststoffen freigegeben sind.

Vorzugsweise weist das verwendete TiO₂ eine Partikelgröße D₅₀ im Bereich von 0,02 - 5 µm, insbesondere 0,05 - 2,5 µm und ganz besonders bevorzugt 0,1 - 1 µm auf.

Der Kern der Mikrokugeln enthält mindestens ein nichtolefinisches Polymer, das vorzugsweise ein thermoplastisches Polymer ist.

Beispiele für besonders bevorzugte thermoplastische Polymere werden vorzugsweise aus der folgenden Gruppe ausgewählt:
- Polyphenylenoxid (PPO)
- Polystyrol(PS)-Mischungen mit > 10 % PS
- Polyester
- Polysulfone
- Polycarbonate
- Polyurethane
oder Mischungen davon.

Beispiele für Polyester sind Polybutylenterephthalat (PBT) oder Polyethylenterephthalat (PET).

Ein Beispiel für Styrolkunststoffe ist Styrol-Acrylnitril.

Um ein geeignetes Polymer auszuwählen, wird ein Fachmann auf dem Gebiet sich vornehmlich vom gewünschten Adhäsionsgrad an das Absorptionsmittelgemisch und der erforderlichen Farbbildungsfähigkeit leiten lassen.

In einer bevorzugten Ausführungsform enthält der Kern PBT oder PPO/PS oder Styrol-Ethylen/Butylen-Styrol (SEBS) oder Mischungen davon als Farbbildner.

In einer besonders bevorzugten Ausführungsform besteht der Kern der Mikrokugeln aus

| | |
|---|---|
| 50 - 90 Gew.-% | eines Absorptionsmittelgemisches, vorzugsweise Bi₂O₃/TiO₂ |
| 10 - 50 Gew.-% | eines nichtolefinischen Polymerfarbbildners, insbesondere PBT oder PPO/PS |

basierend auf dem Kern-Schale-Partikel.

Die Adhäsion des Polymers des Kerns an das Absorptionsmittelgemisch ist in der Regel besser als die von Kern und Kompatibilisierungsmittel (= Schale). Dies gewährleistet die Integrität der Mikrokugeln während ihrer Verarbeitung.

Eine chemische Reaktion zwischen dem Absorptionsmittelgemisch und dem Polymer im Kern sollte vermieden werden. Solche chemischen Reaktionen könnten eine Zersetzung des Absorptionsmittelgemisches und/oder des Polymers verursachen, was zu unerwünschten Nebenprodukten, Verfärbung und schlechten mechanischen und Beschriftungseigenschaften führt.

In den erfindungsgemäßen Mikrokugeln ist der Kern in eine Schale eingebettet, die ein Kompatibilisierungsmittel enthält.

Das Kompatibilisierungsmittel ist unter anderem dafür verantwortlich, die Mikrokugeln während der Herstellung bei Verwendung einer reaktiven Extrusion zu bilden. In einer bevorzugten Ausführungsform haben das Kompatibilisierungsmittel (= Schale) und das Polymer des Kerns eine unterschiedliche Polarität. Darüber hinaus verbessert das Kompatibilisierungsmittel aufgrund seiner vom Kern verschiedenen Polarität die Integrität des Kerns.

Das Kompatibilisierungsmittel ist vorzugsweise ein thermoplastisches Polymer. Bevorzugte thermoplastische Polymere enthalten funktionelle Gruppen, wie z. B. Carbonsäuregruppen, Alkoxysilangruppen oder Alkoholgruppen. Das Kompatibilisierungsmittel der vorliegenden Erfindung ist vorzugsweise ein thermoplastisches Polymer. Insbesondere bevorzugt ist als Kompatibilisierungsmittel ein gepfropftes thermoplastisches Polymer. In einer bevorzugten Ausführungsform ist das gepfropfte thermoplastische Polymer ein gepfropftes Polyolefin. Polyolefinpolymere sind zum Beispiel Homo- und Copolymere aus einem oder mehreren Olefinmonomeren, die mit einer ethylenisch ungesättigten, funktionalisierten Verbindung gepfropft werden können. Beispiele für geeignete Polyolefinpolymere sind Ethylen- und Propylenhomo- und -copolymere. Beispiele für geeignete Ethylenpolymere sind alle thermoplastischen Homopolymere von Ethylen und Copolymere von Ethylen mit einem oder mehreren aus α-Olefinen mit 3-10 Kohlenstoffatomen als Comonomer, insbesondere Propylen, Isobuten, 1-Buten, 1-Hexen, 4-Methyl-1-penten und 1-Octen, die unter Verwendung bekannter Katalysatoren, wie zum Beispiel Ziegler-Natta-, Phillips- und Metallocen-Katalysatoren, hergestellt werden können. Die Menge an Comonomer beträgt in der Regel 0 - 50 Gew.-%, vorzugsweise 5-35 Gew.-%, basierend auf dem Gewicht der Gesamtzusammensetzung. Solche Polyethylene sind zum Beispiel als Polyethylen hoher Dichte (Highdensity polyethylene (HDPE)), Polyethylen niedriger Dichte (Low-density polyethylene (LDPE)), lineares Polyethylen niedriger Dichte (Linear low-density polyethylene (LLDPE)) und lineares Polyethylen mit sehr niedriger Dichte (Linear very low-density polyethylene (VL(L)DPE)) bekannt.

Geeignete Polyethylene weisen vorzugsweise eine Dichte von 860 - 970 kg/m₃ auf, gemessen bei 23 °C gemäß ISO 1183. Beispiele für geeignete Propylenpolymere sind Homopolymere von Propylen und Copolymere von Propylen mit Ethylen, bei denen der Anteil von Ethylen höchstens 30 Gew.-% und vorzugsweise höchstens 25 Gew.-% beträgt.

Beispiele für geeignete ethylenisch ungesättigte, funktionalisierte Verbindungen sind die ungesättigten Carbonsäuren sowie Ester, Anhydride und Metall- oder Nichtmetallsalze davon. Vorzugsweise ist die ethylenische Ungesättigtheit in der Verbindung mit einer Carbonylgruppe konjugiert. Beispiele sind Acryl-, Methacryl-, Malein-, Fumar-, Itacon-, Croton-, Methylcroton- und Zimtsäure sowie Ester, Anhydride und mögliche Salze davon. Von den genannten Verbindungen mit mindestens einer Carbonylgruppe ist Maleinsäureanhydrid bevorzugt.

Beispiele für geeignete, ethylenisch ungesättigte, funktionalisierte Verbindungen mit mindestens einem Epoxyring sind zum Beispiel Glycidylester von ungesättigten Carbonsäuren, Glycidylether von ungesättigten Alkoholen und von Alkylphenolen sowie Vinyl- und Allylester von Epoxycarbonsäuren. Glycidylmethacrylat ist besonders geeignet.

Beispiele für geeignete, ethylenisch ungesättigte, funktionalisierte Verbindungen mit mindestens einer Aminfunktionalität sind Aminverbindungen mit mindestens einer ethylenisch ungesättigten Gruppe, zum Beispiel Allylamin, Propenyl-, Butenyl-, Pentenyl- und Hexenylamin, Aminether, zum Beispiel Isopropenylphenylethylaminether. Die Aminogruppe und die ungesättigte Funktion sollten in einer solchen Anordnung zueinander sein, dass sie die Pfropfreaktion nicht in einem unerwünschten Maß beeinflussen. Die Amine können unsubstituiert sein, können aber auch zum Beispiel mit Alkyl- und Arylgruppen, Halogengruppen, Ethergruppen und Thioethergruppen substituiert sein.

Beispiele für geeignete, ethylenisch ungesättigte, funktionalisierte Verbindungen mit mindestens einer Alkoholfunktionalität sind alle Verbindungen mit einer Hydroxylgruppe, die gegebenenfalls verethert oder verestert sein kann, und einer ethylenisch ungesättigten Verbindung, zum Beispiel Allyl- und Vinylether von Alkoholen wie Ethylalkohol und höheren, verzweigten und unverzweigten Alkylalkoholen sowie Allyl- und Vinylester von mit Alkohol substituierten Säuren, vorzugsweise Carbonsäuren und C₃-C₈-Alkenylalkoholen. Darüber hinaus können die Alkohole mit zum Beispiel Alkyl- und Arylgruppen, Halogengruppen, Ethergruppen und Thioethergruppen substituiert sein, die die Pfropfreaktion nicht in einem unerwünschten Maß beeinflussen.

In der bevorzugten Ausführung ist das Kompatibilisierungsmittel ein funktionalisiertes Polymer, das gepfropft oder ungepfropft sein kann. Besonders bevorzugt ist ein nicht gepfropftes Copolymer aus Ethylen und Glycidylmethacrylat (Ethylen-GMA).

Die Menge der ethylenisch ungesättigten, funktionalisierten Verbindung in dem durch Pfropfen funktionalisierten Polyolefinpolymer liegt vorzugsweise in einem Bereich von 0,05 bis 1 mg Äq. pro Gramm Polyolefinpolymer. Am meisten bevorzugt ist das Kompatibilisierungsmittel mit Maleinsäureanhydrid gepfropftes Polyethylen oder mit Maleinsäureanhydrid gepfropftes Polypropylen.

Die Menge Kompatibilisierungsmittel in Bezug auf das Polymer im Kern der Mikrokugeln liegt zum Beispiel im Bereich von 2-50 Gew.-% und beträgt vorzugsweise 2-30 Gew.-%.

Sowohl das Polymer im Kern als auch das in der Schale sind vorzugsweise unabhängig voneinander thermoplastische Polymere, da dies das Einmischen des/der Bismutabsorptionsmittel in das Polymer im Kern bzw. der Mikrokugeln in ein Matrixpolymer erleichtert, um es zum Laserschreiben geeignet zu machen.

Wenn das Polymer im Kern und das Kompatibilisierungsmittel in der Schale funktionelle Gruppen enthalten, können diese funktionellen Gruppen aneinander gebunden sein. So ist um den Kern der Mikrokugeln eine Schale vorhanden, die über die jeweiligen funktionellen Gruppen an das Polymer im Kern gebunden sein kann.

Die vorliegende Erfindung betrifft des Weiteren die Verwendung von Mikrokugeln als Laserbeschriftungsadditiv. Die Verwendung der Mikrokugeln als laserabsorbierendes Additiv in einer Polymermatrix zeigt eine optimale Farbbildungsfähigkeit. Die Aktivität der Mikrokugeln scheint auf der Weiterleitung der aus dem Laserlicht absorbierten Energie an das Polymer im Kern zu basieren. Das Polymer kann sich aufgrund dieser Wärmefreisetzung zersetzen, was die Farbveränderung hervorruft.

Die Absorptionsmittel sind in den Mikrokugeln zum Beispiel in Form von Partikeln vorhanden. Die Partikelgröße der Absorptionsmittel wird durch die Anforderung bestimmt, dass die Absorptionsmittel in das Polymer im Kern einmischbar sein müssen. Einem Fachmann auf dem Gebiet ist bekannt, dass diese Mischbarkeit durch die Gesamtoberfläche einer bestimmten Gewichtsmenge Absorptionsmittel bestimmt wird und dass der Fachmann die untere Grenze der Partikelgröße der einzumischenden Absorptionsmittel ohne Weiteres bestimmen kann, wenn die gewünschte Größe der Mikrokugeln und die gewünschte Menge von einzumischenden Absorptionsmitteln bekannt sind.

Schließlich werden die Kern-Schale-Partikel in einem Trägerpolymer dispergiert, das in der vorliegenden Erfindung eine Polyolefinmatrix ist. Diese Polyolefinmatrix enthält keinerlei funktionelle Gruppen und ist vorzugsweise ein Polyethylen, insbesondere LLDPE. Als Trägerpolymer können die gleichen Polymere in Betracht gezogen werden wie die für das Kompatibilisierungsmittel aufgeführten, wenn auch in ihrer nicht funktionalisierten Form. Die Menge Trägerpolymer liegt vorzugsweise im Bereich von 20-60 Gew.-% des Gesamtpolymers aus Kern, Schale und Absorptionsmittelgemisch.

In einer besonders bevorzugten Ausführungsform bestehen die Mikrokugeln gemäß der vorliegenden Anmeldung aus

| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | Gepfropftes Polyolefin | (= Schale) |
| 20 - 50 | Gew.-% | Polyolefin | (= Trägerpolymer) |
| 0 - 5 | Gew.-% | Additive | |

oder

| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | SEBS | (= Schale) |
| 20 - 50 | Gew.-% | Polyolefin | (= Trägerpolymer) |
| 0 - 5 | Gew.-% | Additive | |

oder

| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | Ethylen-GMA | (= Schale) |
| 20 - 50 | Gew.-% | Polyolefin | (= Trägerpolymer) |
| 0 - 5 | Gew.-% | Additive | |

basierend auf den Mikrokugeln, wobei die Gew.-% insgesamt ≤ 100 % sind.

Das Polymer im Kern, in der Schale und insbesondere das Trägerpolymer können zusätzlich ein oder mehrere Pigmente, Farbmittel und/oder Farbstoffe oder eine Mischung davon enthalten. Dies hat den Vorteil, dass kein separates, gefärbtes Farbgranulat zugegeben werden muss, wenn die Mikrokugeln mit einem Matrixpolymer wie einem Kunststoff oder Harz vermischt werden.

Vorzugsweise weisen die erfindungsgemäßen Mikrokugeln hinsichtlich ihrer Größe einen mittleren Durchmesser im Bereich von 0,5 - 10 µm, mehr bevorzugt im Bereich von 0,5 - 5 µm und insbesondere bevorzugt im Bereich von 1 - 3 µm auf.

Um eine laserbeschriftbare Zusammensetzung zu liefern, werden die Mikrokugeln zum Beispiel in das Matrixpolymer eingemischt. Es ist möglich, das Matrixpolymer als das Trägerpolymer auszuwählen. Gegebenenfalls kann das Matrixpolymer auch als ein weiteres Polymer zugegeben werden, um so später eine verbesserte Einmischung in eine größere Menge des Matrixpolymers zu erreichen.

Die vorliegende Erfindung betrifft auch ein Verfahren zur Herstellung der erfindungsgemäßen Mikrokugeln. In einer bevorzugten Ausführungsform werden die Mikrokugeln mittels reaktiver Extrusion hergestellt. In einem ersten Schritt werden das/die Lichtabsorptionsmittel, vorzugsweise Bi₂O₃ und TiO₂, und die Schmelze des den Kern bildenden Polymers vermischt. Das Verhältnis zwischen Menge des den Kern bildenden Polymers und der Menge Lichtabsorptionsmittel liegt im Bereich von 90 Vol.-%:10 Vol.-% bis 40 Vol.-%:60 Vol.-%. Mehr bevorzugt liegt dieses Verhältnis im Bereich von 80 Vol.-%:20 Vol.-% bis 50 Vol.-%:50 Vol.-%. Im zweiten Schritt wird die Mischung aus Absorptionsmittel(n) und Polymerschmelze mit dem Kompatibilisierungsmittel vermischt. Dieses Mischen findet vorzugsweise oberhalb des Schmelzpunkts von sowohl Polymer als auch Kompatibilisierungsmittel statt, vorzugsweise in Gegenwart einer Menge eines nicht funktionalisierten Trägerpolymers. Geeignete Trägerpolymere sind insbesondere solche, die oben für das Kompatibilisierungsmittel genannt wurden, jedoch in ihrer nicht funktionalisierten Form. Dieses Trägerpolymer muss nicht das Gleiche sein wie das Kompatibilisierungsmittel. Das Vorhandensein eines nicht funktionalisierten Trägerpolymers gewährleistet eine passende Schmelzverarbeitbarkeit der Gesamtmischung, sodass die gewünschte homogene Verteilung der Mikrokugeln erhalten wird.

Um eine laserbeschriftbare Polymerzusammensetzung zu erhalten, werden die erfindungsgemäßen Mikrokugeln in die Polymermatrix eingemischt. Es wurde gefunden, dass das die erfindungsgemäßen Mikrokugeln enthaltende Matrixpolymer verglichen mit bekannten Zusammensetzungen mit einem sehr hohen Kontrast und mit sehr hoher Geschwindigkeit beschriftet werden kann.

Die vorliegende Erfindung betrifft daher auch eine laserbeschriftbare Zusammensetzung, die ein Matrixpolymer und erfindungsgemäße Mikrokugeln enthält.

Alle bekannten Matrixpolymere wie z. B. Kunststoffe, Bindemittel, Harze, usw. können für die Laserbeschriftungs- und Laserschweißanwendung eingesetzt werden. Geeignete Kunststoffe sind Thermoplaste und Duroplaste wie z. B. Polyethylen (PE), Polypropylen (PP), Polyamid (PA), Polyester, Polyether, Polyphenylenether, Polyacrylat, Polyurethan (PU), Polyoxymethylen (POM), Polymethacrylat, Polymethylmethacrylat (PMMA), Polyvinylacetat (PVAC), Polystyrol (PS), Acrylnitril-Butadien-Styrol (ABS), Acrylnitril-Styrol-Acrylat (ASA), ABS-gepfropftes Polymer, Polybutylenterephthalat (PBT), Polyethylenterephthalat (PET), Polyvinylchlorid (PVC), Polyvinylidenchlorid (PVDC), Polyvinylidenfluorid (PVDF), Polytetrafluorethylen (PTFE), Polycarbonat (PC), Polyethersulfone, Polyetherketon, thermoplastisches Polyurethan (TPU), thermoplastische Elastomere (TPE), Epoxyharz (EP), Silikonharz (SI), ungesättigtes Polyesterharz (UP), Phenolformaldehydharz (PF), Harnstoffformaldehydharz (UF), Melaminharz (MF) und Copolymere davon und/oder Mischungen davon. Das Polymer kann auch ein Copolymer oder Blockcopolymer, usw. sein. Es können gebräuchliche und geeignete Additive vorhanden sein.

Beispiele für bevorzugte Matrixpolymere sind Polyethylen mit ultrahoher Molmasse (UHMWPE), zum Beispiel von Solpor™, Styrolkunststoffe, einschließlich ABS, Styrol-Acrylnitril (SAN) und Polymethyl(meth)acrylat, Polyurethan, Polyester, einschließlich PET und PBT, Polyoxymethylen (POM), Polyvinylchlorid (PVC), Polyethylen (PE), Polypropylen (PP), Polyamid (PA), Polyurethan (PU), thermoplastische Vulkanisate wie zum Beispiel Santoprene™ und SARLINK®, thermoplastische Elastomere wie zum Beispiel Hytrel® und Arnitel®, und Silikonkautschuke wie zum Beispiel Cenusil® und Geniomer®.

Die laserbeschriftbare Zusammensetzung gemäß der vorliegenden Erfindung kann auch weitere Additive enthalten, von denen zum Beispiel bekannt ist, dass sie bestimmte Eigenschaften des Matrixpolymers verbessern oder ihm weitere Eigenschaften verleihen. Beispiele für geeignete Additive sind verstärkende Materialien wie Glasfasern und Kohlefasern, Nanofüllstoffe wie Tone, einschließlich Wollastonit, Glimmer, Pigmente, Farbstoffe, Farbmittel, Füllstoffe wie Calciumcarbonat, Talk, Verarbeitungshilfen, Stabilisatoren, Antioxidantien, Weichmacher, Schlagzähigkeitsverbesserer, Flammschutzmittel, Formtrennmittel, Schaumbildner, usw.

Die Menge an Mikrokugeln in der Polymermatrix kann von sehr geringen Mengen wie z. B. 0,1 oder 1 Vol.-% bis zu 70 bis 80 Vol.-% oder mehr reichen, jeweils in Bezug auf das Volumen der gebildeten Verbindung. Die Mikrokugeln werden normalerweise in solchen Mengen angewandt, dass bei Bestrahlung der Zusammensetzung kein oder ein weniger negativer Einfluss auf den Kontrast des Laserbeschriftungsergebnisses erhalten wird.

Im Folgenden sind typische Bereiche für Konzentrationen von Mikrokugeln in der Polymermatrix oder Verbindung für die Laserbeschriftung angegeben. Für eine Laserbeschriftung werden typischerweise 0,2 und 2,0 Gew.-% Mikrokugeln zum Matrixpolymer gegeben.

Die erfindungsgemäße laserbeschriftbare Zusammensetzung kann hergestellt werden, indem die Mikrokugeln einfach in das geschmolzene Matrixpolymer eingemischt werden.

Im Allgemeinen findet der Einbau der Mikrokugeln innerhalb des Matrixpolymers durch einfaches Mischen der Kunststoffpellets mit dem Absorptionsmittel und gegebenenfalls mit weiteren Additiven und/oder Farbstoffen und/oder Farbmitteln gefolgt von einer Formung durch Exposition gegenüber Wärme statt. Während des Einbaus der Mikrokugeln können die Kunststoffpellets gegebenenfalls mit Haftvermittlern, organischen, polymerkompatiblen Lösungsmitteln, Stabilisatoren, Dispersionsmitteln und/oder Tensiden behandelt werden, die bei den Betriebstemperaturen beständig sind. Die dotierten Kunststoffpellets werden üblicherweise erzeugt, indem die Kunststoffpellets in einen geeigneten Mischer gegeben werden, diese mit beliebigen Additiven benetzt werden und dann die Mikrokugeln zugegeben und eingebaut werden. Der Kunststoff wird im Allgemeinen mittels eines Farbkonzentrats (Farbgranulats) oder einer Verbindung pigmentiert. Die resultierende Mischung kann dann direkt in einem Extruder oder einer Spritzgussmaschine verarbeitet werden. Die während der Verarbeitung geformten Formen weisen eine sehr homogene Absorptionsmittelverteilung auf. Schließlich findet die Laserbeschriftung oder das Laserschweißen mit einem geeigneten Laser statt.

Der Kunststoff wird vorzugsweise wie folgt mittels geeigneter Laserbestrahlung beschriftet oder geschweißt.

Die Beschriftungsmethode mittels Laser ist so, dass die Probe in den Strahlengang eines gepulsten Laserstrahls, vorzugsweise eines Nd:YAG-Lasers, gebracht wird. Die Beschriftung kann auch mit einem CO₂-Laser, z. B. unter Verwendung einer Maskentechnik erfolgen. Die gewünschten Ergebnisse können auch mit anderen gebräuchlichen Arten von Lasern erreicht werden, deren Wellenlänge innerhalb des Bereichs der hohen Absorption der verwendeten Mikrokugeln liegt. Die erhaltene Beschriftung wird durch die Bestrahlungsdauer (oder Anzahl von Pulsen im Falle eines gepulsten Lasers) und durch die vom Laser emittierte Leistung sowie durch das verwendete Polymersystem bestimmt. Die Leistung des verwendeten Lasers hängt von der spezifischen Anwendung ab und kann von einem Facharbeiter in einem spezifischen Fall ohne Weiteres bestimmt werden.

Beim Laserbeschriften hat der verwendete Laser im Allgemeinen eine Wellenlänge in einem Bereich von 157 nm bis 10,6 µm, vorzugsweise in einem Bereich von 532 nm bis 10,6 µm. Beispiele, die genannt werden können, sind ein CO₂-Laser (10,6 µm) und ein Nd:YAG-Laser (1064 nm, 532 nm oder 355 nm) sowie ein gepulster UV-Laser. Excimerlaser weisen die folgenden Wellenlängen auf: F₂-Excimerlaser: 157 nm, ArF-Excimerlaser: 193 nm, KrCI-Excimerlaser: 222 nm, KrF-Excimerlaser: 248 nm, XeCI-Excimerlaser: 308 nm, XeF-Excimerlaser: 351 nm sowie frequenzvervielfachte Nd:YAG-Laser: Wellenlänge von 355 nm (frequenzverdreifacht) oder 265 nm (frequenzvervierfacht). Besonders bevorzugt ist die Verwendung von Nd:YAG-Lasern (1064 oder 532 nm) und CO₂-Lasern. Die Energiedichten der verwendeten Laser liegen im Allgemeinen innerhalb eines Bereichs von 0,3 mJ/cm² bis 50 J/cm², vorzugsweise von 0,3 mJ/cm² bis 10 J/cm².

Werden gepulste Laser verwendet, liegt die Pulsfrequenz im Allgemeinen innerhalb eines Bereichs von 1 bis 150 kHz. Entsprechende Laser, die im erfindungsgemäßen Verfahren verwendet werden können, stehen kommerziell zur Verfügung.

Das Beschriften mit dem Laser wird vorzugsweise ausgeführt, indem der Gegenstand in den Strahlengang eines CO₂-Lasers (10,6 µm) oder eines gepulsten Lasers, vorzugsweise eines Nd:YAG-Lasers eingeführt wird.

Das Laserschweißen wird durchgeführt, indem die Probe in den Strahlengang eines Dauerstrichlasers, vorzugsweise eines Nd:YAG- oder Diodenlasers eingeführt wird. Die Wellenlängen liegen vorzugsweise zwischen 808 und 1100 nm. Da die meisten Polymere bei diesen Wellenlängen mehr oder weniger durchlässig sind, wird die Absorptionseigenschaft durch die Zugabe der Mikrokugeln erreicht. Schweißen unter Verwendung anderer gebräuchlicher Lasertypen ist ebenfalls möglich, wenn diese bei einer Wellenlänge arbeiten, bei der das Absorptionsmittel in den verwendeten Mikrokugeln eine hohe Absorption aufweist. Das Schweißen wird durch die Bestrahlungsdauer und die Bestrahlungsleistung des Lasers sowie das verwendete Kunststoffsystem bestimmt. Die Leistung der verwendeten Laser hängt von der jeweiligen Anwendung ab und kann von einem Fachmann auf dem Gebiet für den Einzelfall ohne Weiteres bestimmt werden.

Die Zusammensetzungen, die die Mikrokugeln als erfindungsgemäßes Laserbeschriftungsadditiv enthalten, können in jedem beliebigen Bereich verwendet werden, in dem gebräuchliche Druckprozesse bisher zur Beschriftung oder Markierung von Matrixpolymeren verwendet wurden. Annähernd jeder Kunststoffgegenstand kann in einer lasermarkierbaren oder laserbeschriftbaren Form erhalten werden. Jede Art von Gegenstand, der aus einem Matrixpolymer wie einem Kunststoff besteht, kann mit Funktionsdaten, Strichcodes, Logos, Grafiken, Bildern und Identifizierungscodes versehen werden. Darüber hinaus können sie Anwendung finden
- in medizinischer Ausrüstung wie Röhrchen, Behältern für Gewebeproben oder Flüssigkeiten, Spritzen, Töpfen, Abdeckungen, Kathetern,
- im Automobilbereich z. B. für Flüssigkeitsbehälter, Verkabelungen, Komponenten,
- im Telekom- und E&E-Bereich z. B. für GSM-Vorderteile, Tastaturen, Mikroschalter,
- in Sicherheits- und Identifizierungsanwendungen wie z. B. Kreditkarten, Identifizierungskarten, Tieridentifizierungsmarken, Etiketten, Sicherheitsstreifen,
- in Marketinganwendungen wie z. B. Logos, Dekoration auf Korken, Golfbällen, Werbeartikeln,
- in Verpackungen wie z. B. ein- und mehrlagigen Folien, Flaschen, Kappen und Verschlüssen, einschließlich Schraubkappen für Flaschen, Sicherheitsverschlüssen und synthetischen Korken,
aber nicht darauf beschränkt.

Zum Beispiel können Formen, die aus den erfindungsgemäßen Kunststoffen hergestellt wurden, in der Elektroindustrie, Elektronikindustrie und Motorfahrzeugindustrie verwendet werden. Mit Hilfe von Laserlicht ist es möglich, Identifizierungsmarkierungen oder Beschriftungsmarkierungen selbst an Stellen zu erzeugen, zu denen der Zugang schwierig ist, zum Beispiel auf Kabeln, Leitungen, Dekostreifen oder funktionalen Teilen im Heizungs-, Lüftungs- und Kältesektor oder auf Schaltern, Steckern, Hebeln oder Griffen, die aus erfindungsgemäßem Kunststoff bestehen. Das erfindungsgemäße Polymersystem kann auch für Verpackungen im Nahrungsmittel- und Getränkesektor oder im Spielzeugsektor verwendet werden. Die Beschriftungen auf der Verpackung sind wisch- und kratzbeständig, beständig bei nachgelagerten Sterilisierungsprozessen und können auf eine hygienisch saubere Weise beim Beschriftungsprozess eingesetzt werden. Vollständige Etikettenmotive können dauerhaft auf Verpackungen von wiederverwendbaren Systemen aufgebracht werden. Ein weiterer wichtiger Anwendungssektor der Laserbeschriftung ist die Beschriftung von Kunststoffen zur Erzeugung von individuellen Identifizierungsmarkierungen für Tiere, die als Rinderohrmarke oder nur Ohrmarke bekannt sind. Die spezifisch mit dem Tier zusammenhängenden Informationen werden über ein Strichcodesystem gespeichert. Bei Bedarf können sie mit Hilfe eines Scanners wieder abgerufen werden. Die Beschriftung muss äußert beständig sein, da einige Marken viele Jahre lang an den Tieren verbleiben.

Laserschweißen mit den erfindungsgemäßen Mikrokugeln kann in allen Bereichen durchgeführt werden, bei denen gebräuchliche Fügeverfahren eingesetzt wurden und in denen es bisher nicht möglich war, den Schweißprozess aufgrund von laserdurchlässigen Polymeren oder blassen Farben einzusetzen. Der Schweißprozess für laserdurchlässige Kunststoffe stellt also eine Alternative zu herkömmlichen Fügeverfahren dar, zum Beispiel Hochfrequenzschweißen, Vibrationsschweißen, Ultraschallschweißen, Heißluftschweißen oder auch Adhäsionskleben von Kunststoffteilen.

Die nachfolgenden Beispiele sind dazu gedacht die Erfindung zu erläutern.

Die Prozentangaben beziehen sich, wenn nicht anders angegeben, auf das Gewicht.

### Beispiele

Verfahren zur Herstellung eines Laserbeschriftungsabsorptionsmittelkonzentrats (laser marking absorber concentrate LMAC, Tabelle 1) und des Vergleichsmischungskonzentrats. (comparative compounding concentrate CCC Tabelle 1.1)
unter Verwendung von
als das erste Polymer (Kernpolymer):
- P1,0 Polybutylenterephthalat 1060 (DSM)
- P1,1 Noryl 6850H-100 (Mischung aus PPO/PS 50/50, Sabic®)
- P1.2 Polybutylenterephthalat Crastin 6130 NC010 (Dupont) als das zweite Polymer: (Schale: Kompatibilisierungsmittel)

- P2,0 Fusabond® 525N Polyethylen (Dupont), gepfropft mit 0,9 Gew.-% MA
- P2,1 Kraton 1650G (Dupont)
- P2,2 Lotader AX8840 Randomcopolymer, Ethylen und 8 Gew-% Glycidylmethacrylat
als das dritte Polymer (Trägerpolymer):
- P3 lineares Polyethylen niedriger Dichte (LLDPE Sabic) M50002
als das Absorptionsmittel:
- A-1 Bismutoxid (Bi₂O₃) mit einem D₅₀ von 1 µm (5N Plus Lübeck GmbH)
- A-2 Iriotec 8825 (Merck KGaA)
- A-3 Iriotec 8208 (Merck KGaA)
als Weisspigment, bzw. Füllstoff
- F-1 Kronos 2900, TiO₂ Rutil, Fa. Kronos
- F-2 Kronos 2220 TiO₂ Rutil, Fa. Kronos
- F-3 Fluorocarb ST, gefällte Kreide, Fa. Central Technology UK
als das Matrixpolymer:
- M-1 lineares Polyethylen niedriger Dichte M500026 (Sabic)

Verfahren zur Herstellung eines Laserbeschriftungsabsorptionsmittelkonzentrats (LMAC, Tabelle 1) und des Vergleichsmischungskonzentrats. (CCC Tabelle 1.1)

Unter Verwendung eines Doppelschneckenextruders (Leistritz Mikro 27) wird eine Reihe Laserbeschriftungsabsorptionsmittelkonzentrate LMAC 01 - LMAC 06 sowie Vergleichsmischungskonzentrate CCC 01 - CCC 03 hergestellt. Die Zusammensetzungen der LMAC bzw. CCC sind in Tabelle 1 bzw. 1.1 aufgeführt. Für LMAC 01- LMAC 06 und CCC 01 - CCC 03 beträgt die Schneckengeschwindigkeit 250 Umdrehungen pro Minute. Der Durchsatz beträgt für alle Verbindungen 20 kg/h. Bei LMAC 01 - LMAC 06 beträgt die Temperatur in der Zone 1 260 °C bis Zone 10 260 °C und am Extruderkopf 280 °C. Bei CCC 01 beträgt die Temperatur in Zone 1 210 °C und in Zone 10 220 °C, am Extruderkopf 220 °C.

**Tabelle 1: Zusammensetzung der Laserbeschriftungsabsorptionsmittelkonzentrate**

| Verbindung | LMAC 01 | LMAC 02 | LMAC 03 | LMAC 04 | LMAC 05 | LMAC 06 |
|---|---|---|---|---|---|---|
| Erstes Polymer | P1,0 | P1,2 | P1,2 | P1,2 | P1,1 | P1,0 |
| | 20 | 30 | 30 | 20 | 50 | 30 |
| Absorptions mittel | A-1 | A-1 | A-1 | A-1 | A-1 | A-1 |
| | 57 | 20 | 35 | 57 | 25 | 20 |
| Weisspigment/Füllstoff | F-1 | F-1 | F-1 | F-2 | F-1 | F-3 |
| | 23 | 50 | 35 | 23 | 25 | 50 |

**Tabelle 1.1: Zusammensetzung der Vergleichsmischungskonzentrate**

| Verbindung | CCC 01 | CCC 02 | CCC 03 |
|---|---|---|---|
| Matrixpolymer | M-1 | M-1 | M-1 |
| | 95 | 95 | 90 |
| Absorptionsmittel | A-1 | | |
| | 5 | | |
| Absorptionsmittel | | A-2 | |
| | | 5 | |
| Absorptionsmittel | | | A-3 |
| | | | 10 |

### Verfahren zur Herstellung der Laserbeschriftungskonzentrate (laser marking concentrate LMC)

Unter Verwendung eines Doppelschneckenextruders (Leistritz Mikro 27) wird eine Reihe Laserbeschriftungskonzentrate LMC 01 - LMC 06 hergestellt. Die Zusammensetzung der LMC ist in Tabelle 2 aufgeführt. Die Schneckengeschwindigkeit beträgt 250 Umdrehungen pro Minute und der Durchsatz 20 kg/h. Bei LMC 01 - LMC 06 beträgt die Temperatur in Zone 1 260 °C und in Zone 10 280 °C, am Extruderkopf 280 °C.

**Tabelle 2: Zusammensetzung der Laserbeschriftungskonzentrate**

| Verbindung | LMC 01 | LMC 02 | LMC 03 | LMC 04 | LMC 05 | LMC 06 |
|---|---|---|---|---|---|---|
| LMAC 01 | 70 | | | | | |
| LMAC 02 | | 70 | | | | |
| LMAC 03 | | | 70 | | | |
| LMAC 04 | | | | 70 | | |
| LMAC 05 | | | | | 50 | |
| LMAC 06 | | | | | | 60 |
| 2. Polymer | P2,0 | P2,0 | P2,0 | P2,2 | P2,1 | P2,1 |
| | 2 | 2 | 2 | 1,5 | 5 | 2,5 |
| 3. Polymer | P3 | P3 | P3 | P3 | P3 | P3 |
| | 28 | 28 | 28 | 28,5 | 45 | 37,5 |

### Verfahren zur Herstellung der verdünnten Laserbeschriftungskonzentrate (laser marking diluted concentrate LMDC)

Unter Verwendung eines Doppelschneckenextruders (Leistritz Mikro 27) wird eine Reihe verdünnter Laserbeschriftungskonzentrate LMDC 01 - LMDC 06 hergestellt. Die Zusammensetzung der LMDC ist in Tabelle 3 aufgeführt. Die Schneckengeschwindigkeit beträgt 250 Umdrehungen pro Minute und der Durchsatz 15 kg/h. Bei den verdünnten Konzentraten LMDC 01 - LMDC 06 beträgt die Temperatur in Zone 1 200 °C und in Zone 10 200 °C, am Extruderkopf ebenfalls 200 °C.

**Tabelle 3: Zusammensetzung der verdünnten Laserbeschriftungskonzentrate**

| | LMDC 01 | LMDC 02 | LMDC 03 | LMDC 04 | LMDC 05 | LMDC 06 |
|---|---|---|---|---|---|---|
| LMC 01 | 9 | | | | | |
| LMC 02 | | 10 | | | | |
| LMC 03 | | | 10 | | | |
| LMC 04 | | | | 9 | | |
| LMC 05 | | | | | 20 | |
| LMC 06 | | | | | | 11 |
| Matrixpolymer | M-1 | M-1 | M-1 | M-1 | M-1 | M-1 |
| | 91 | 90 | 90 | 91 | 80 | 89 |

### Verfahren zur Herstellung eines Laserbeschriftungsprodukts (laser marking product LMP)

Laserbeschriftungsprodukte wurden unter Verwendung eines Doppelschneckenextruders (Leistritz Mikro 27) hergestellt. Die Zusammensetzung der LMP sowie die Verarbeitungsbedingungen sind in Tabelle 4 aufgeführt. Die Schneckengeschwindigkeit betrug 250 Umdrehungen pro Minute und der Durchsatz 15 kg/h. Die Temperatur in Zone 1 beträgt 200 °C und in Zone 10 200 °C, am Extruderkopf 200 °C.

**Tabelle 4: Zusammensetzung der Laserbeschriftungsprodukte (LMP)**

| Verbindung | LMP 01 | LMP 02 | LMP 03 | LMP 04 | LMP 05 | LMP 06 |
|---|---|---|---|---|---|---|
| LMDC 01 | 10 | | | | | |
| LMDC 02 | | 10 | | | | |
| LMDC 03 | | | 10 | | | |
| LMDC 04 | | | | 10 | | |
| LMDC 05 | | | | | 10 | |
| LMDC 06 | | | | | | 10 |
| Matrixpolymer | M-1 | M-1 | M-1 | M-1 | M-1 | M-1 |
| | 90 | 90 | 90 | 90 | 90 | 90 |

### Herstellung von Laserbeschriftungsproben

Laserbeschriftbare Proben (laser marking sample LMSA) werden unter Verwendung von Spritzguss hergestellt. Die Zusammensetzung der LMSA sowie die Verarbeitungsbedingungen sind in Tabelle 5a und 5c aufgeführt. Die Temperatur in Zone 1 wird für alle Proben auf 190 °C eingestellt. Die Temperatur in Zone 2, Zone 3 und am Ansatz beträgt überall 220 °C.

**Tabelle 5a: Zusammensetzung und Verarbeitungsbedingungen von Laserbeschriftungsproben**

| | LMSA 01 | LMSA 02 | LMSA 03 | LMSA 04 | LMSA 05 | LMSA 06 | LMSA 07 | LMSA 08 | LMSA 09 |
|---|---|---|---|---|---|---|---|---|---|
| LMP 01 | 100 | 50 | 25 | | | | | | |
| LMP 02 | | | | 100 | 50 | 25 | | | |
| LMP 03 | | | | | | | 100 | 50 | 25 |
| Matrixpolymer | | M-1 | M-1 | | M-1 | M-1 | | M-1 | M-1 |
| | | 50 | 75 | | 50 | 75 | | 50 | 75 |

**Tabelle 5b: Zusammensetzung und Verarbeitungsbedingungen von Laserbeschriftungsproben**

| | LMSA 10 | LMSA 11 | LMSA 12 | LMSA 13 | LMSA 14 | LMSA 15 | LMSA 16 | LMSA 17 | LMSA 18 |
|---|---|---|---|---|---|---|---|---|---|
| | | | | | | | | | |
| LMP4 | 100 | 50 | 25 | | | | | | |
| LMP5 | | | | 100 | 50 | 25 | | | |
| LMP6 | | | | | | | 100 | 50 | 25 |
| Matrixpolymer | | M-1 | M-1 | | M-1 | M-1 | | M-1 | M-1 |
| | | 50 | 75 | | 50 | 75 | | 50 | 75 |

**Tabelle 5c: Zusammensetzung und Verarbeitungsbedingungen von Laserbeschriftungsproben**

| | LMSA 19 | LMSA 20 | LMSA 21 | LMSA 22 | LMSA 23 | LMSA 24 | LMSA 25 | LMSA 26 | LMSA 27 |
|---|---|---|---|---|---|---|---|---|---|
| Matrixpolymer | M-1 | M-1 | M-1 | M-1 | M-1 | M-1 | M-1 | M-1 | M-1 |
| | 90 | 95 | 97,5 | 90 | 95 | 97,5 | 90 | 95 | 97,5 |
| CCC 01 | 10 | 5 | 2,5 | | | | | | |
| CCC 02 | | | | 10 | 5 | 2,5 | | | |
| CCC 03 | | | | | | | 10 | 5 | 2,5 |

### Laserbeschriftungsleistung

Die Laserbeschriftungsbewertungen werden mit einem diodengepumpten IR-Lasersystem von Trumpf VMc5 mit 10,5 Watt durchgeführt. Es werden sogenannte Evaluierungsmatrizen markiert. In solchen Matrizen wird die Beschriftungsgeschwindigkeit (v [mm/sec]) und Frequenz (f [kHz]) bei einer gegebenen Leistung (p [%]), Brennweite (z = 0 [im Brennpunkt] über der Probe und Zeilenabstand variiert. Im Wesentlichen geben die Evaluierungsmatrizen an, welcher Kontrast bei einer bestimmten Beschriftungsgeschwindigkeit unter Variieren der Laserparameter erhalten werden kann. Eine Bewertung der Laserbeschriftungsleistung in Bezug auf Kontrast und Beschriftungsgeschwindigkeit, angegeben mit + und - in einem Bereich von ausgezeichnet (+++++) bis schlecht (-----), ist in Tabelle 6 aufgeführt.

**Tabelle 6: Bewertung der Laserbeschriftungsleistung der LMSA bei einer Laserleistung von 99 % und einer Zeilengeschwindigkeit zwischen 500 und 5000 mm/min**

| Probe | Probenbeschriftung | Lichtabsorptionsmittel in Gewichtsprozent ¹ | Beschriftungsleistung |
|---|---|---|---|
| Brennweite [+ mm] | | | 10 |
| LMSA 01 | Matrixpolymer: M1 | 0,5 | +++++ |
| LMSA 02 | Matrixpolymer: M1 | 0,25 | ++++ |
| LMSA 03 | Matrixpolymer: M1 | 0,125 | +++ |
| LMAS 04 | Matrixpolymer: M1 | 0,5 | +++++ |
| LMSA 05 | Matrixpolymer: M1 | 0,25 | ++++ |
| LMSA 06 | Matrixpolymer: M1 | 0,125 | +++ |
| LMSA 07 | Matrixpolymer: M1 | 0,5 | +++++ |
| LMSA 08 | Matrixpolymer: M1 | 0,25 | ++++ |
| LMSA 09 | Matrixpolymer: M1 | 0,125 | +++ |
| LMSA 10 | Matrixpolymer: M1 | 0,5 | +++++ |
| LMSA 11 | Matrixpolymer: M1 | 0,25 | ++++ |
| LMSA 12 | Matrixpolymer: M1 | 0,125 | +++ |
| LMSA 13 | Matrixpolymer: M1 | 0,5 | +++++ |
| LMSA 14 | Matrixpolymer: M1 | 0,25 | ++++ |
| LMSA 15 | Matrixpolymer: M1 | 0,125 | +++ |
| LMSA 16 | Matrixpolymer: M1 | 0,5 | ++++ |
| LMSA 17 | Matrixpolymer: M1 | 0,25 | +++ |
| LMSA 18 | Matrixpolymer: M1 | 0,125 | ++ |
| LMSA 19 | Matrixpolymer: M1 | 0,5 | +++ |
| LMSA 20 | Matrixpolymer: M1 | 0,25 | +⁻ |
| LMSA 21 | Matrixpolymer: M1 | 0,125 | -- |
| LMSA 22 | Matrixpolymer: M1 | 0,5 | ++ |
| LMSA 23 | Matrixpolymer: M1 | 0,25 | +- |
| LMSA 24 | Matrixpolymer: M1 | 0,125 | - |
| LMSA 25 | Matrixpolymer: M1 | 0,5 | + |
| LMSA 26 | Matrixpolymer: M1 | 0,25 | -+ |
| LMSA 27 | Matrixpolymer: M1 | 0,125 | -- |

| | | | |
|---|---|---|---|
| ¹bezogen auf die Gesamtmenge der laserbeschriftbaren Zusammensetzung. | | | |

## Patentansprüche

1. Mikrokugel umfassend Kern-Schale-Partikel dispergiert in einem Polyolefinträger, **dadurch gekennzeichnet, dass** der Kern als Absorptionsmittel ein Gemisch bestehend aus einer oder mehreren Bismutverbindungen und einem oder mehreren Weißpigmenten und/oder hellen oder weißen mineralischen Füllstoffen enthält und als Filmbildner mindestens eine nichtolefinische Polymerverbindung enthält und die Schale mindestens ein Kompatibilisierungsmittel aufweist, wobei der D₅₀-Wert für die Weißpigmente bzw. Füllstoffe 0,02 - 5 µm beträgt.

2. Mikrokugel nach Anspruch 1, **dadurch gekennzeichnet, dass** die Bismutverbindung aus der Gruppe der Oxide, Hydroxide, Sulfide, Sulfate, Phosphate, Halogenide oder Oxyhalogenide ausgewählt ist.

3. Mikrokugel nach Anspruch 1 oder 2, **dadurch gekennzeichnet, dass** die Bismutverbindung Bi₂O₃ oder BiOCI ist.

4. Mikrokugel nach einem oder mehreren der Ansprüche 1 bis 3,
**dadurch gekennzeichnet, dass** das Weißpigment ausgewählt ist aus der Gruppe Titandioxid, Bariumsulfat, Zinkoxid und Zinksulfid.

5. Mikrokugel nach einem oder mehreren der Ansprüche 1 bis 4,
**dadurch gekennzeichnet, dass** der mineralische Füllstoff ausgewählt ist aus der Gruppe Calciumcarbonat, Calciumsilikat, Calciumsulfat, Kaolin, Quarz und Talkum.

6. Mikrokugel nach einem oder mehreren der Ansprüche 1 bis 5,
**dadurch gekennzeichnet**, das Absorptionsmittel aus einem Gemisch aus Bi₂O₃ und TiO₂ besteht.

7. Mikrokugel nach einem oder mehreren der Ansprüche 1 bis 6,
**dadurch gekennzeichnet, dass** das Gewichtsverhältnis Bismutverbindung : Weißpigment und/oder Füllstoff 99 : 1 bis 1 : 99 Teile beträgt.

8. Mikrokugel nach einem oder mehreren der Ansprüche 1 bis 7,
**dadurch gekennzeichnet, dass** das nichtolefinische Polymer ein Farbbildner ist.

9. Mikrokugel nach einem oder mehreren der Ansprüche 1 bis 8,
**dadurch gekennzeichnet, dass** das nichtolefinische Polymer PPO/PS oder PBT ist.

10. Mikrokugel nach einem oder mehreren der Ansprüche 1 bis 9,
**dadurch gekennzeichnet, dass** das Kompatibilisierungsmittel ein funktionalisiertes Polymer ist.

11. Mikrokugel nach einem oder mehreren der Ansprüche 1 bis 10,
**dadurch gekennzeichnet, dass** das Kompatibilisierungsmittel ein gepfropftes Polymer ist.

12. Mikrokugel nach einem oder mehreren der Ansprüche 1 bis 11,
**dadurch gekennzeichnet, dass** das Kompatibilisierungsmittel ein gepfropftes Polyethylen oder gepfropftes Polypropylen ist.

13. Mikrokugel nach einem oder mehreren der Ansprüche 1 bis 12,
**dadurch gekennzeichnet, dass** das Kompatibilisierungsmittel ein mit Maleinsäureanhydrid gepfropftes Polyethylen oder mit Maleinsäureanhydrid gepfropftes Polypropylen ist.

14. Mikrokugel nach einem oder mehreren der Ansprüche 1 bis 13,
**dadurch gekennzeichnet, dass** das Kompatibilisierungsmittel Styrol-Ethylen/Butylen-Styrol (SEBS) ist.

15. Mikrokugel nach einem oder mehreren der Ansprüche 1 bis 14,
**dadurch gekennzeichnet, dass** der Polyolefinträger ein lineares Polyethylen niedriger Dichte (LLDPE), Polyethylen sehr niedriger Dichte (VLDPE), Polyethylen niedriger Dichte (LDPE) oder ein Metallocen-Polyethylen (m-PE) ist.

16. Mikrokugel nach einem oder mehreren der Ansprüche 1 bis 15,
**dadurch gekennzeichnet, dass** der Kern, die Schale und/oder die Matrix Additive enthalten können, die aus der Gruppe der verstärkenden Materialien wie Glasfasern und Kohlefasern, Nanofüllstoffen, Pigmenten, Farbstoffen, Farbmitteln, Füllstoffen, Verarbeitungshilfen, Stabilisatoren, Antioxidantien, Weichmachern, Schlagzähigkeitsverbesserer, Flammschutzmitteln, Formtrennmitteln oder Schaumbildnern ausgewählt werden.

17. Mikrokugel nach einem oder mehreren der Ansprüche 1 bis 16,
**dadurch gekennzeichnet, dass** die Mikrokugeln eine mittlere Partikelgröße von 0,5 - 3,0 Mikrometern aufweisen.

18. Mikrokugel nach einem oder mehreren der Ansprüche 1 bis 17,
**dadurch gekennzeichnet, dass** die Mikrokugeln bestehen aus
| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | Gepfropftes Polyolefin | (= Schale) |
| 20 - 50 | Gew.-% | Polyolefin | (= Matrix) |
| 0 - 5 | Gew.-% | Additive | |
basierend auf der Mikrokugel, wobei die Gew.-% insgesamt ≤ 100 % sind.

19. Mikrokugel nach einem oder mehreren der Ansprüche 1 bis 17,
**dadurch gekennzeichnet, dass** die Mikrokugeln bestehen aus
| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | SEBS | (= Schale) |
| 20 - 50 | Gew.-% | Polyolefin | (= Matrix) |
| 0 - 5 | Gew.-% | Additive | |
basierend auf der Mikrokugel, wobei die Gew.-% insgesamt ≤ 100 % sind.

20. Mikrokugel nach einem oder mehreren der Ansprüche 1 bis 17, **dadurch gekennzeichnet, dass** die Mikrokugeln bestehen aus
| | | | |
|---|---|---|---|
| 25 - 70 | Gew.-% | Bi₂O₃/TiO₂ | (= Kern) |
| 8 - 25 | Gew.-% | PPO/PS oder PBT | (= Kern) |
| 0,5 - 7,5 | Gew.-% | Ethylen-GMA | (= Schale) |
| 20 - 50 | Gew.-% | Polyolefin | (= Matrix) |
| 0 - 5 | Gew.-% | Additive | |
basierend auf der Mikrokugel, wobei die Gew.-% insgesamt ≤ 100 % sind.

21. Verfahren zur Herstellung der Mikrokugeln nach einem oder mehreren der Ansprüche 1 bis 20 durch reaktive Extrusion.

22. Verwendung der Mikrokugeln nach einem oder mehreren der Ansprüche 1 bis 20 als ein Laserbeschriftungsadditiv oder als Laserschweißadditiv.

23. Laserbeschriftbare und laserschweißbare Zusammensetzung,
**dadurch gekennzeichnet, dass** sie ein Matrixpolymer und mindestens eine Mikrokugeln nach einem oder mehreren der Ansprüche 1 bis 20 enthält.

24. Laserbeschriftbare und laserschweißbare Zusammensetzung nach Anspruch 23, **dadurch gekennzeichnet, dass** sie 0,1 - 1,0 Gew.-% an Mikrokugeln nach einem oder mehreren der Ansprüche 1 bis 20 enthält.

25. Laserbeschriftbare und laserschweißbare Zusammensetzung nach Anspruch 23 oder 24, **dadurch gekennzeichnet, dass** das Matrixpolymer ausgewählt wird aus Polyethylen (PE), Polypropylen (PP), Polyamid (PA), Polyester, Polyether, Polyphenylenether, Polyacrylat, Polyurethan (PU), Polyoxymethylen (POM), Polymethacrylat, Polymethylmethacrylat (PMMA), Polyvinylacetat (PVAC), Polystyrol (PS), Acrylnitril-Butadien-Styrol (ABS), Acrylnitril-Styrol-Acrylat (ASA), ABS-gepfropftem Polymer, Polybutylenterephthalat (PBT), Polyethylenterephthalat (PET), Polyvinylchlorid (PVC), Polyvinylidenchlorid (PVDC), Polyvinylidenfluorid (PVDF), Polytetrafluorethylen (PTFE), Polycarbonat (PC), Polyethersulfonen, Polyetherketon, thermoplatischem Polyurethan (TPU), thermoplatischen Elastomeren (TPE), Epoxyharz (EP), Silikonharz (SI), ungesättigtem Polyesterharz (UP), Phenolformaldehydharz (PF), Harnstoffformaldehydharz (UF), Melaminharz (MF), Polyethylen mit ultrahoher Molmasse (UHMWPE), Styrolkunststoffen, Styrolacrylnitril (SAN), thermoplastischen Vulkanisaten, thermoplastischen Elastomeren, Silikonkautschuken und Copolymeren davon und/oder Mischungen davon.

26. Verfahren zur Herstellung einer laserbeschriftbaren und laserschweißbaren Zusammensetzung nach einem oder mehreren der Ansprüche 23 bis 25, **dadurch gekennzeichnet, dass** ein Matrixpolymer mit den Mikrokugeln und gegebenenfalls weiteren Additiven gemischt wird und schließlich durch Exposition gegenüber Wärme geformt wird.

## Claims

1. Microspheres comprising core/shell particles dispersed in a polyolefin carrier, **characterised in that** the core comprises, as absorber, a mixture consisting of one or more bismuth compounds and one or more white pigments and/or pale or white mineral fillers and comprises, as film former, at least one non-olefinic polymer compound, and the shell comprises at least one compatibiliser, where the D₅₀ value for the white pigments or fillers is 0.02 - 5 µm.

2. Microspheres according to Claim 1, **characterised in that** the bismuth compound is selected from the group of the oxides, hydroxides, sulfides, sulfates, phosphates, halides or oxyhalides.

3. Microspheres according to Claim 1 or 2, **characterised in that** the bismuth compound is Bi₂O₃ or BiOCI.

4. Microspheres according to one or more of Claims 1 to 3, **characterised in that** the white pigment is selected from the group titanium dioxide, barium sulfate, zinc oxide and zinc sulfide.

5. Microspheres according to one or more of Claims 1 to 4, **characterised in that** the mineral filler is selected from the group calcium carbonate, calcium silicate, calcium sulfate, kaolin, quartz and talc.

6. Microspheres according to one or more of Claims 1 to 5, **characterised in that** the absorber consists of a mixture of Bi₂O₃ and TiO₂.

7. Microspheres according to one or more of Claims 1 to 6, **characterised in that** the bismuth compound : white pigment and/or filler weight ratio is 99 : 1 to 1 : 99 parts.

8. Microspheres according to one or more of Claims 1 to 7, **characterised in that** the non-olefinic polymer is a colour former.

9. Microspheres according to one or more of Claims 1 to 8, **characterised in that** the non-olefinic polymer is PPO/PS or PBT.

10. Microspheres according to one or more of Claims 1 to 9, **characterised in that** the compatibiliser is a functionalised polymer.

11. Microspheres according to one or more of Claims 1 to 10, **characterised in that** the compatibiliser is a grafted polymer.

12. Microspheres according to one or more of Claims 1 to 11, **characterised in that** the compatibiliser is a grafted polyethylene or grafted polypropylene.

13. Microspheres according to one or more of Claims 1 to 12, **characterised in that** the compatibiliser is a polyethylene grafted to maleic anhydride or a polypropylene grafted to maleic anhydride.

14. Microspheres according to one or more of Claims 1 to 13, **characterised in that** the compatibiliser is styrene-ethylene/butylene-styrene (SEBS).

15. Microspheres according to one or more of Claims 1 to 14, **characterised in that** the polyolefin carrier is a linear low-density polyethylene (LLDPE), very low-density polyethylene (VLDPE), low-density polyethylene (LDPE) or a metallocene-polyethylene (m-PE).

16. Microspheres according to one or more of Claims 1 to 15, **characterised in that** the core, the shell and/or the matrix may comprise additives selected from the group of the reinforcing materials, such as glass fibres and carbon fibres, nanofillers, pigments, dyes, colorants, fillers, processing assistants, stabilisers, antioxidants, plasticisers, impact modifiers, flame retardants, mould-release agents or foam formers.

17. Microspheres according to one or more of Claims 1 to 16, **characterised in that** the microspheres have an average particle size of 0.5 - 3.0 microns.

18. Microspheres according to one or more of Claims 1 to 17, **characterised in that** the microspheres consist of
| | | |
|---|---|---|
| 25 - 70% by weight | of Bi₂O₃/TiO₂ | (= core) |
| 8 - 25% by weight | of PPO/PS or PBT | (= core) |
| 0.5 - 7.5% by weight | of grafted polyolefin | (= shell) |
| 20 - 50% by weight | of polyolefin | (= matrix) |
| 0 - 5% by weight | of additives | |
based on the microspheres, where the % by weight add up to ≤ 100%.

19. Microspheres according to one or more of Claims 1 to 17, **characterised in that** the microspheres consist of
| | | |
|---|---|---|
| 25 - 70% by weight | of Bi₂O₃/TiO₂ | (= core) |
| 8 - 25% by weight | of PPO/PS or PBT | (= core) |
| 0.5 - 7.5% by weight | of SEBS | (= shell) |
| 20 - 50% by weight | of polyolefin | (= matrix) |
| 0 - 5% by weight | of additives | |
based on the microspheres, where the % by weight add up to ≤ 100%.

20. Microspheres according to one or more of Claims 1 to 17, **characterised in that** the microspheres consist of
| | | | |
|---|---|---|---|
| 25 - 70 | % by weight | of Bi₂O₃/TiO₂ | (= core) |
| 8 - 25 | % by weight | of PPO/PS or PBT | (= core) |
| 0.5 - 7.5 | % by weight | of ethylene-GMA | (= shell) |
| 20 - 50 | % by weight | of polyolefin | (= matrix) |
| 0 - 5 | % by weight | of additives | |
based on the microspheres, where the % by weight add up to ≤ 100%.

21. Process for the production of the microspheres according to one or more of Claims 1 to 20 by reactive extrusion.

22. Use of the microspheres according to one or more of Claims 1 to 20 as a laser marking additive or as laser welding additive.

23. Laser-markable and laser-weldable composition, **characterised in that** it comprises a matrix polymer and at least one microsphere according to one or more of Claims 1 to 20.

24. Laser-markable and laser-weldable composition according to Claim 23, **characterised in that** it comprises 0.1 - 1.0% by weight of microspheres according to one or more of Claims 1 to 20.

25. Laser-markable and laser-weldable composition according to Claim 23 or 24, **characterised in that** the matrix polymer is selected from polyethylene (PE), polypropylene (PP), polyamide (PA), polyester, polyether, polyphenylene ether, polyacrylate, polyurethane (PU), polyoxymethylene (POM), polymethacrylate, polymethyl methacrylate (PMMA), polyvinyl acetate (PVAC), polystyrene (PS), acrylonitrile-butadiene-styrene (ABS), acrylonitrile-styrene-acrylate (ASA), ABS graft polymer, polybutylene terephthalate (PBT), polyethylene terephthalate (PET), polyvinyl chloride (PVC), polyvinylidene chloride (PVDC), polyvinylidene fluoride (PVDF), polytetrafluoroethylene (PTFE), polycarbonate (PC), polyether sulfones, polyether ketone, thermoplastic polyurethane (TPU), thermoplastic elastomers (TPE), epoxy resin (EP), silicone resin (SI), unsaturated polyester resin (UP), phenol-formaldehyde resin (PF), urea-formaldehyde resin (UF), melamine resin (MF), ultrahigh-molecular-weight polyethylene (UHMWPE), styrene plastics, styrene-acrylonitrile (SAN), thermoplastic vulcanisates, thermoplastic elastomers, silicone rubbers and copolymers thereof and/or mixtures thereof.

26. Process for the preparation of a laser-markable and laser-weldable composition according to one or more of Claims 23 to 25, **characterised in that** a matrix polymer is mixed with the microspheres and optionally further additives and finally shaped by exposure to heat.

## Revendications

1. Microsphères comprenant des particules de noyau/d'enveloppe qui sont dispersées dans un support de polyoléfine, **caractérisées en ce que** le noyau comprend, en tant qu'absorbeur, un mélange qui est constitué par un ou plusieurs composé(s) de bismuth et par un ou plusieurs pigment(s) blanc(s) et/ou agent(s) de remplissage minéral/minéraux pale(s) ou blanc(s) et comprend, en tant qu'agent filmogène, au moins un composé de polymère non oléfinique, et l'enveloppe comprend au moins un agent de compatibilisation, dans lesquelles la valeur de D₅₀ pour les pigments ou les agents de remplissage blancs est de 0,02 - 5 µm.

2. Microsphères selon la revendication 1, **caractérisées en ce que** le composé de bismuth est sélectionné parmi le groupe qui est constitué par les oxydes, les hydroxydes, les sulfures, les sulfates, les phosphates, les halogénures et les oxyhalogénures.

3. Microsphères selon la revendication 1 ou 2, **caractérisées en ce que** le composé de bismuth est le Bi₂O₃ ou le BiOCl.

4. Microsphères selon une ou plusieurs des revendications 1 à 3, **caractérisées en ce que** le pigment blanc est sélectionné parmi le groupe qui est constitué par le dioxyde de titane, le sulfate de baryum, l'oxyde de zinc et le sulfure de zinc.

5. Microsphères selon une ou plusieurs des revendications 1 à 4, **caractérisées en ce que** l'agent de remplissage minéral est sélectionné parmi le groupe qui est constitué par le carbonate de calcium, le silicate de calcium, le sulfate de calcium, le kaolin, le quartz et le talc.

6. Microsphères selon une ou plusieurs des revendications 1 à 5, **caractérisées en ce que** l'absorbeur est constitué par un mélange de Bi₂O₃ et de TiO₂.

7. Microsphères selon une ou plusieurs des revendications 1 à 6, **caractérisées en ce que** le rapport en poids composé de bismuth : pigment et/ou agent de remplissage blanc est de 99 : 1 à 1 : 99 parties.

8. Microsphères selon une ou plusieurs des revendications 1 à 7, **caractérisées en ce que** le polymère non oléfinique est un agent chromogène.

9. Microsphères selon une ou plusieurs des revendications 1 à 8, **caractérisées en ce que** le polymère non oléfinique est le PPO/PS ou le PBT.

10. Microsphères selon une ou plusieurs des revendications 1 à 9, **caractérisées en ce que** l'agent de compatibilisation est un polymère fonctionnalisé.

11. Microsphères selon une ou plusieurs des revendications 1 à 10, **caractérisées en ce que** l'agent de compatibilisation est un polymère greffé.

12. Microsphères selon une ou plusieurs des revendications 1 à 11, **caractérisées en ce que** l'agent de compatibilisation est un polyéthylène greffé ou un polypropylène greffé.

13. Microsphères selon une ou plusieurs des revendications 1 à 12, **caractérisées en ce que** l'agent de compatibilisation est un polyéthylène greffé sur de l'anhydride maléique ou un polypropylène greffé sur de l'anhydride maléique.

14. Microsphères selon une ou plusieurs des revendications 1 à 13, **caractérisées en ce que** l'agent de compatibilisation est le styrène-éthylène/butylène-styrène (SEBS).

15. Microsphères selon une ou plusieurs des revendications 1 à 14, **caractérisées en ce que** le support de polyoléfine est un polyéthylène de faible densité linéaire (LLDPE), un polyéthylène de très faible densité (VLDPE), un polyéthylène de faible densité (LDPE) ou un métallocène-polyéthylène (m-PE).

16. Microsphères selon une ou plusieurs des revendications 1 à 15, **caractérisées en ce que** le noyau, l'enveloppe et/ou la matrice peuvent/ peut comprendre des additifs qui sont sélectionnés parmi le groupe qui est constitué par les matériaux de renforcement, tels que les fibres de verre et les fibres de carbone, les agents de remplissage d'échelle nanométrique, les pigments, les teintures, les colorants, les agents de remplissage, les adjuvants de traitement, les stabilisateurs, les antioxydants, les plastifiants, les modificateurs d'impact, les agents ignifuges, les agents de libération de moule ou les agents moussants.

17. Microsphères selon une ou plusieurs des revendications 1 à 16, **caractérisées en ce que** les microsphères présentent une taille de particule moyenne de 0,5 - 3,0 micromètres.

18. Microsphères selon une ou plusieurs des revendications 1 à 17, **caractérisées en ce que** les microsphères sont constituées par :
| | |
|---|---|
| 25 - 70% en poids de Bi₂O₃/TiO₂ | (= noyau) |
| 8 - 25% en poids de PPO/PS ou de PBT | (= noyau) |
| 0,5 - 7,5% en poids de polyoléfine greffée | (= enveloppe) |
| 20 - 50% en poids de polyoléfine | (= matrice) |
| 0 - 5% en poids d'additifs | |
sur la base des microsphères, où le % en poids cumulé est ≤ 100%.

19. Microsphères selon une ou plusieurs des revendications 1 à 17, **caractérisées en ce que** les microsphères sont constituées par :
| | |
|---|---|
| 25 - 70% en poids de Bi₂O₃/TiO₂ | (= noyau) |
| 8 - 25% en poids de PPO/PS ou de PBT | (= noyau) |
| 0,5 - 7,5% en poids de SEBS | (= enveloppe) |
| 20 - 50% en poids de polyoléfine | (= matrice) |
| 0 - 5% en poids d'additifs | |
sur la base des microsphères, où le % en poids cumulé est ≤ 100%.

20. Microsphères selon une ou plusieurs des revendications 1 à 17, **caractérisées en ce que** les microsphères sont constituées par :
| | | |
|---|---|---|
| 25 - 70 | % en poids de Bi₂O₃/TiO₂ | (= noyau) |
| 8 - 25 | % en poids de PPO/PS ou de PBT | (= noyau) |
| 0,5 - 7,5 | % en poids d'éthylène-GMA | (= enveloppe) |
| 20 - 50 | % en poids de polyoléfine | (= matrice) |
| 0 - 5 | % en poids d'additifs | |
sur la base des microsphères, où le % en poids cumulé est ≤ 100%.

21. Procédé pour la fabrication des microsphères selon une ou plusieurs des revendications 1 à 20 au moyen d'une extrusion réactive.

22. Utilisation des microsphères selon une ou plusieurs des revendications 1 à 20 en tant qu'additif de marquage au laser ou en tant qu'additif de soudage au laser.

23. Composition pouvant être utilisée pour le marquage au laser ou le soudage au laser, **caractérisée en ce qu'**elle comprend un polymère de matrice et au moins une microsphère selon une ou plusieurs des revendications 1 à 20.

24. Composition pouvant être utilisée pour le marquage au laser ou le soudage au laser selon la revendication 23, **caractérisée en ce qu'**elle comprend 0,1 - 1,0% en poids de microsphères selon une ou plusieurs des revendications 1 à 20.

25. Composition pouvant être utilisée pour le marquage au laser ou le soudage au laser selon la revendication 23 ou 24, **caractérisée en ce que** le polymère de matrice est sélectionné parmi le polyéthylène (PE), le polypropylène (PP), le polyamide (PA), le polyester, le polyéther, l'éther de polyphénylène, le polyacrylate, le polyuréthane (PU), le polyoxyméthylène (POM), le polyméthacrylate, le polyméthylméthacrylate (PMMA), l'acétate de polyvinyle (PVAC), le polystyrène (PS), l'acrylonitrile-butadiène-styrène (ABS), l'acrylonitrile-styrèneacrylate (ASA), le polymère greffé ABS, le téréphtalate de polybutylène (PBT), le téréphtalate de polyéthylène (PET), le chlorure de polyvinyle (PVC), le chlorure de polyvinylidène (PVDC), le fluorure de polyvinylidène (PVDF), le polytétrafluoroéthylène (PTFE), le polycarbonate (PC), les sulfones de polyéther, le polyéthercétone, le polyuréthane thermoplastique (TPU), les élastomères thermoplastiques (TPE), la résine époxy (EP), la résine silicone (SI), la résine de polyester non saturée (UP), la résine de phénol-formaldéhyde (PF), la résine d'urée-formaldéhyde (UF), la résine de mélamine (MF), le polyéthylène de poids moléculaire ultra-élevé (UHMWPE), les matières plastiques à base de styrène, le styrène-acrylonitrile (SAN), les vulcanisâts thermoplastiques, les élastomères thermoplastiques, les caoutchoucs silicone et leurs copolymères et/ou des mélanges de ceux-ci.

26. Procédé pour la préparation d'une composition pouvant être utilisée pour le marquage au laser et le soudage au laser selon une ou plusieurs des revendications 23 à 25, **caractérisé en ce qu'**un polymère de matrice est mélangé avec les microsphères et en option, d'autres additifs et pour finir, est mis en forme au moyen d'une exposition à la chaleur.
